# EUROPÄISCHE PATENTSCHRIFT

(11) **EP 0 502 443 B1**
(45) Veröffentlichungstag und Bekanntmachung des Hinweises auf die Patenterteilung: **12.07.1995**
(21) Anmeldenummer: 92103467.4
(22) Anmeldetag: 28.02.1992
(51) Int. Cl.: B01D 53/90

(54) **Regenerativ-Vorwärmer und Verfahren zum Betrieb desselben**
Regenerative preheater and method of operating the same
Préchauffeur à régénération et méthode d'opération dudit système

(30) Priorität: 04.03.1991 DE 4106837
(43) Veröffentlichungstag der Anmeldung: 09.09.1992
(73) Patentinhaber: SIEMENS AKTIENGESELLSCHAFT, 80333 München (DE)
(72) Erfinder: Balling, Lothar, Dipl.-Ing., W-8510 Fürth (DE); Hüttenhofer, Klaus, W-8501 Heroldsberg (DE)

(56) Entgegenhaltungen:
- EP-A- 0 194 430
- WO-A-85/03645
- WO-A-86/01431
- WO-A-87/01613
- DE-U- 8 424 417

## Beschreibung

Die Erfindung bezieht sich auf einen regenerativen Wärmetauscher oder sogenannten Regenerativ-Vorwärmer, in den ein Katalysator eingebaut ist. Die Erfindung bezieht sich weiterhin auf ein Verfahren zum Betrieb eines solchen Regenerativ-Vorwärmers. Die Erfindung läßt sich sowohl für Luftvorwärmer (Luvos) als auch für Gasvorwärmer (Gavos) einsetzen.

Es ist bekannt, daß man einen SCR-Katalysator in einen regenerativen Wärmetauscher einbauen kann. Aus der EP-A-0 172 246 ist insbesondere bekannt, daß man dabei das Reaktionsmittel, und zwar vorliegend das Reduktionsmittel Ammoniak (NH₃), auf der Roh-, Rauch- oder Abgasseite zugeben kann; und aus der DE-A-34 31 730 ist zu entnehmen, daß man das Reduktionsmittel auf der Reingas- oder Luftseite zugeben kann. Im einen Fall wird also das Ammoniak dem Rauchgas vor dessen Eingang in den Katalysator und im anderen Fall der zu erwärmenden Frischluft vor deren Eintritt in den Katalysator zugemischt. In beiden Fällen werden die im Rauchgas enthaltenen Schadstoffkomponenten, und zwar NOₓ, nach dem SCR-Verfahren in unschädliche Komponenten katalytisch umgesetzt.

Bei der rauchgasseitigen Zugabe von Ammoniak ergibt sich folgendes Problem: Im Katalysator haben das Ammoniak und die störenden Schadstoffkomponenten NOₓ eine zu geringe Verweilzeit, so daß hier nur eine unzureichende Reaktion stattfindet. Nicht verbrauchtes Ammoniak wird dadurch auf die Seite des gereinigten Rauchgases weitergeleitet, die zum Kamin führt. Dieser "Schlupf", also der Durchtritt von unverbrauchtem Reaktionsmittel, sollte verringert werden, da durch die Abgabe über den Kamin die Umwelt belastet wird.

Auch im anderen Fall, nämlich bei der luftseitigen Zugabe von Ammoniak, ergeben sich Probleme: Hier besteht in der Regel eine Leckage, das heißt von der Seite des Reingases gelangt ein gewisser Anteil des Ammoniaks - trotz vorhandener Dichtungen - auf die Seite des gereinigten Rauchgases, geht somit verloren und belastet die nachgeschalteten Anlagenteile. Darüber hinaus zeigt eine genauere Analyse des katalytischen Verhaltens, daß - bei Üblicher Anströmung des Katalysators von unten - im oberen Teil des Katalysators relativ wenig Ammoniak gespeichert wird; aber genau dieser obere Teil des Katalysators wird dem Rohgas mit der hohen Schadstoff-Konzentration ausgesetzt. Hieraus resultiert ein relativ geringer Reduktionsgrad für die Schadstoffe.

Es läßt sich also festhalten: Da alle Regenerativ-Wärmetauscher je nach Schaltung und Ausführung einen gewissen Schlupf von der Luft- auf die Rauchgasseite haben, gelangt auch das Reaktions- oder Reduktionsmittel unerwünschterweise unreagiert auf die Seite des gereinigten Rauchgases. Bei ungünstiger Anlagentechnik kann so bis zu 5 % des Reduktionsmittels auf die Seite des gereinigten Rauchgases gelangen, was bis zu 10 mg/m³ NH₃ bedeutet. Es ist wünschenswert, diesen NH₃-Schlupf und die damit verbundenen Verschmutzungs- und Korrosionsprobleme wesentlich zu reduzieren. Darüber hinaus ist es wünschenswert, möglichst viel NH₃ im Katalysator für die Reaktion mit der Schadstoffkomponente des Rohgases zu speichern.

Aufgabe der Erfindung ist es demnach, einen Regenerativ-Vorwärmer, der einen Wärmespeicher und einen Katalysator umfaßt, die wechselweise von einem eine Schadstoffkomponente enthaltenden Rohgas und einem Reingas durchströmt werden, wobei zwecks katalytischer Reaktion ein Reaktionsmittel in einen Strömungsweg eingeleitet wird, so auszugestalten, daß der Schlupf verringert und der Reaktionsgrad des Katalysators vergrößert wird. Weiterhin soll ein Verfahren zum Betrieb eines solchen Regenerativ-Vorwärmers angegeben werden.

Die erstgenannte Aufgabe wird gelöst durch einen Regenerativ-Vorwärmer, der aufweist:
a) einen Wärmespeicher,
b) einen Katalysator,
   wobei der Wärmespeicher und der Katalysator jeweils gemeinsam wechselweise von einem eine Schadstoffkomponente (z. B. NOₓ) enthaltenden Rohgas (z. B. Rauchgas) und von einem Reingas (z. B. Luft) durchströmbar sind,
c) mit einer ersten Zugabestelle für ein gasförmiges Reaktionsmittel (z. B. NH₃), die im Strömungsweg des Rohgases vor dem Katalysator gelegen ist, und
d) mit einer zweiten Zugabestelle für das gleiche gasförmige Reaktionsmittel (z. B. NH₃), die im Strömungsweg des Reingases vor dem Katalysator gelegen ist.

Nach einer ersten grundlegenden Ausführungsform ist vorgesehen, daß die zweite Zugabestelle so angeordnet ist, daß das Reaktionsmittel dem gesamten Strom des Reingases zumischbar ist. Dabei kann die zweite Zugabestelle ein Netz mehrerer Einspeisepunkte für das Reaktionsmittel umfassen, wobei dieses Netz quer zum Strömungsweg des Reingases angeordnet ist.

Gemäß einer grundlegenden zweiten Ausführungsform ist vorgesehen, daß die zweite Zugabestelle mindestens eine Austrittsöffnung umfaßt, die in einem von dem Reingas durchströmbaren Teilkanal angeordnet ist.

Nach einer dritten grundlegenden Ausführungsform ist vorgesehen, daß die zweite Zugabestelle
a) ein Netz mehrerer Einspeisepunkte für das Reaktionsmittel, das quer zum Strömungsweg des Reingases angeordnet ist, und
b) mindestens eine Austrittsöffnung für das Reaktionsmittel, die in einem von dem Reingas durchströmbaren Teilkanal angeordnet ist,
umfaßt. Hierbei sind also die erste und die zweite grundlegende Ausführungsform miteinander kombiniert.

Die genannte Aufgabe bezüglich des Verfahrens wird erfindungsgemäß dadurch gelöst, daß sowohl in den Strömungsweg des Rohgases als auch in den Strömungsweg des Reingases das Reaktionsmittel eingeleitet wird. Die Einleitung wird bevorzugt über Ventile bedarfsgerecht eingestellt. Gegenüber der bekannten Ausführung mit Einleitung des Reaktionsmittels allein in den Strömungsweg des Reingases ergibt sich als Vorteil, daß - da auf der Reingasseite weniger Reaktionsmittel eingeleitet werden muß - der Schlupf reduziert ist. Daneben ergibt sich der Vorteil eines höheren Reaktionsgrades, da der Katalysator von der Rauchgasseite her auch und bevorzugt im oberen Teil mit Reaktionsmittel angereichert wird.

Hierbei wird bevorzugt so vorgegangen, daß das Reaktionsmittel annähernd über den gesamten Querschnitt des Strömungsweges des Reingases und/oder über einen abgegrenzten Teilkanal des Strömungsweges des Reingases dem Reingas beigemischt wird.

Weitere vorteilhafte Ausgestaltungen der Erfindung sind in den Unteransprüchen gekennzeichnet.

Ausführungsbeispiele der Erfindung werden im folgenden anhand der Zeichnung beschrieben. Es zeigen:
- FIG 1: einen Regenerativ-Vorwärmer mit Katalysator gemäß der Erfindung, bei dem eine erste Zugabestelle und eine doppelte zweite Zugabestelle für ein gasförmiges Reaktionsmittel vorgesehen sind,
- FIG 2: einen Schnitt A-A durch den Regenerativ-Vorwärmer von Figur 1 mit Blick von unten,
- FIG 3: ein Diagramm, bei dem die Konzentration c des gespeicherten Reaktionsmittels NH₃ über der Höhe H des Katalysators aufgetragen ist,
- FIG 4: einen Schnitt B-B durch den Regenerativ-Vorwärmer gemäß Figur 2 zur Illustration der zweiten grundlegenden Ausführungsform der zweiten Zugabestelle und
- FIG 5: ein zugehöriges Diagramm, bei dem die Konzentration c des gespeicherten Reaktionsmittels NH₃ über der Höhe H des Katalysators aufgetragen ist.

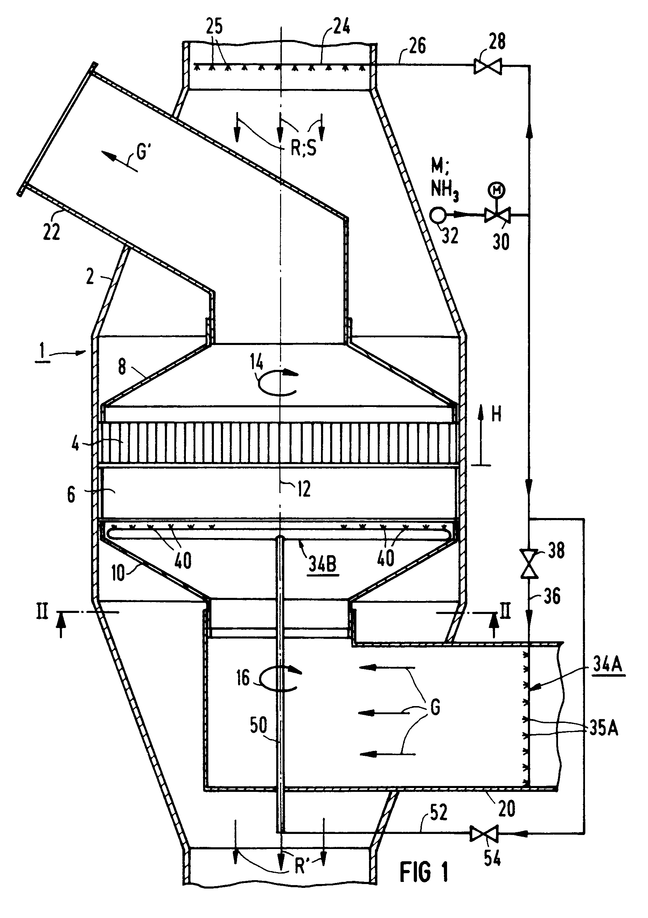

In Figur 1 ist im Schnitt ein Regenerativ-Vorwärmer 1 weitgehend konventioneller Bauart gezeigt, der als Luftvorwärmer (Luvo) ausgebildet ist. Dieser Vorwärmer 1 umfaßt ein Gehäuse 2, in das von oben heißes, mit einer Schadstoffkomponente S belastetes Rohgas R einströmt. Dieses Rohgas R wird von einer (nicht gezeigten) Verbrennungsanlage geliefert. Insbesondere handelt es sich dabei um Rauchgas, das mit Stickoxiden NOₓ als Schadstoffkomponenten S belastet ist. Dieses Rohgas R verläßt den Vorwärmer 1 am unteren Ende in gereinigter und abgekühlter Form. Das abgekühlte Rohgas ist mit R' bezeichnet.

Im mittleren Teil des Gehäuses 2 befinden sich im eingebauten, fixierten Zustand ein SCR-Katalystor 4 und ein nachgeschalteter Wärmespeicher 6. Beidseitig dieser Anordnung 4, 6 befindet sich jeweils eine segmentierte Haube 8 bzw. 10, die um eine senkrechte Achse 12 gemeinsam drehbar sind. Dies ist durch gekrümmte Pfeile 14 bzw. 16 verdeutlicht. Die Drehung kann schrittweise oder kontinuierlich erfolgen. Infolge der Drehung werden immer andere Teile des Katalysators 4 dem schadstoffbelasteten heißen Rohgas R ausgesetzt.

In den unteren Teil des Gehäuses 2 führt eine L-förmige Zuleitung 20 für Reingas G, die an die Haube 10 zentral angeschlossen ist. Das Reingas G wird im Wärmespeicher 6 erwärmt. Es tritt dann über den Katalysator 4, die Haube 8 und eine abgeknickte Auslaßleitung 22 aus dem oberen Teil des Gehäuses 2 als heißes Reingas G' seitlich aus. Bei dem Gas G kann es sich insbesondere um Luft handeln, die vor der Zuführung zu einem Brenner aufgewärmt werden soll.

Von Bedeutung ist, daß eine erste Zugabestelle 24 für ein gasförmiges Reaktionsmittel M im Strömungsweg des Rohgases R vor dem Katalysator 4 vorgesehen ist. Bei diesem Reaktionsmittel kann es sich insbesondere um das Reduktionsmittel Ammoniak (NH₃) handeln. Ammoniak wird üblicherweise bei DeNOx-Katalysatoren verwendet, die nach dem SCR-Verfahren arbeiten. Die erste Zugabestelle 24 ist dabei ein Netz aus vielen Einspeisepunkten oder Löchern 25, das über eine oder mehrere Zuleitungen 26 und Ventile 28 sowie über ein verstellbares Regelventil 30 aus einer Reaktionsmittel-Quelle 32 gespeist wird. Ersichtlich ist das genannte Netz im oberen Teil des Gehäuses 2 quer zum Strömungsweg des Rohgases R angeordnet.

Weiterhin ist eine zweite Zugabestelle 34 A für dasselbe gasförmige Reaktionsmittel M, also zum Beispiel NH₃, vorgesehen. Diese zweite Zugabestelle 34 A ist im Strömungsweg des Reingases G vor dem Katalysator 4 gelegen, vorliegend in der Zuleitung 20. Bei der zweiten Zugabestelle 34 A ist vorliegend darauf geachtet, daß über sie das Reaktionsmittel M dem gesamten Strom des Reingases G zugemischt werden kann. Deswegen ist die zweite Zugabestelle 34A ebenfalls als ein Netz ausgebildet, das mehrere Einspeisepunkte oder Löcher 35 A für das Reaktionsmittel M umfaßt. Dieses Netz ist quer zum Strömungsweg des Reingases G angeordnet.

Die zweite Zugabestelle 34A wird über eine oder mehrere Leitungen 36 und Ventile 38 sowie über das Regelventil 30 aus der Quelle 32 gespeist. Mit Hilfe der Ventile 28, 38 läßt sich das Verhältnis zwischen dem dem Reingas G zugeführten Reaktionsmittel M und dem dem Rohgas R zugeführten Reaktionsmittel M einstellen. Untersuchungen haben ergeben, daß dieses Verhältnis größer als 0,5 sein sollte, beispielsweise kann es 60 zu 40 betragen. Die Gesamtmenge pro Zeiteinheit an zugeführtem Reaktionsmittel M läßt sich mit Hilfe des Regelventils 30 einstellen.

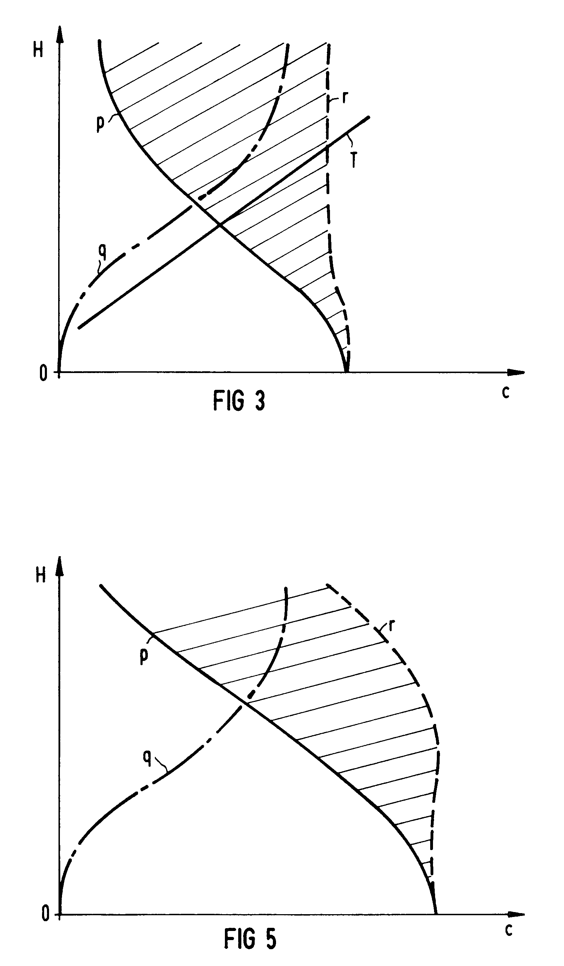

Es war bereits betont worden, daß vorliegend sowohl in den Strömungsweg des Rohgases R als auch in den Strömungsweg des Reingases G das Reaktionsmittel M eingeleitet wird. Der Erfolg und die Wirkung dieser Maßnahme läßt sich aus Figur 3 ablesen. Hier ist die Konzentration c von Ammoniak (NH₃) im Katalysator 4 über der Höhe H des Katalysators 4 aufgetragen. Die Kurve p bezieht sich dabei auf die Anreicherung von NH₃ im Katalysator aufgrund der Zuführung über das Reingas G. Danach wird im unteren Bereich, also in der Nähe H = O, eine hohe Konzentration c festgestellt. Die Kurve q bezieht sich dagegen auf die Anreicherung des Ammoniaks über die Zugabe zum Rohgas R. Danach wird eine höhere Konzentration c im oberen Bereich des Katalysators 4 festgestellt. Die aus beiden Maßnahmen gemäß Kurven p, q resultierende Kurve r zeigt, daß sich auf diese Weise über die Höhe H des Katalysators 4 ein fast konstantes Angebot an Reaktionsmittel M, im vorliegenden Fall also NH₃, erreichen läßt. Infolge dieses (gegenüber dem Stand der Technik erhöhten) Angebotes an NH₃ ergibt sich ein hoher Umwandlungsgrad für das Schadgas NOₓ. Wichtig dabei ist, daß auf der Rohgasseite nur so viel NH₃ zugegeben wird, daß kein Schlupf entsteht. Das heißt bei der Höhe H = O sollte die NH₃-Konzentration gleich Null sein. Diese Zugabe läßt sich über das Ventil 28 einstellen. Der gestrichelte Bereich entspricht der Zugabe über die Rohgasseite.

In Figur 3 ist zusätzlich noch schematisch der Verlauf der Temperatur T über der Höhe H eingetragen. Danach herrscht im oberen Bereich des Katalysators 4 eine höhere Temperatur als im unteren Bereich. Je höher die Temperatur T, desto größer ist die Umwandlungsaktivität. Durch die Erhöhung der NH₃-Konzentration im Katalysator 4 gemäß Kurve q wird somit der obere Bereich dieses Katalysators 4 gegenüber der Kurve p besonders zur katalytischen Umwandlung herangezogen.

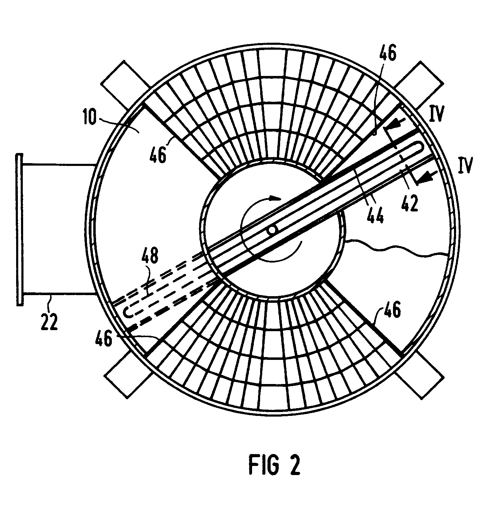

In Figur 1 und 2 ist zusätzlich eine zweite Variante (grundlegende Ausführungsform) für die zweite Zugabestelle eingezeichnet. Diese zweite Variante ist mit 34 B bezeichnet. Diese zweite Zugabestelle 34B umfaßt eine Anzahl von Austrittsöffnungen 40 für das Reaktionsmittel M, die in einem Teilkanal 42 angeordnet sind, der von dem Reingas G durchströmt ist. Gemäß Figur 1 und 2 ist eine Kombination von erster und zweiter Variante 34A und 34B möglich. Natürlich können beide Varianten 34A, 34B auch jeweils für sich allein realisiert werden.

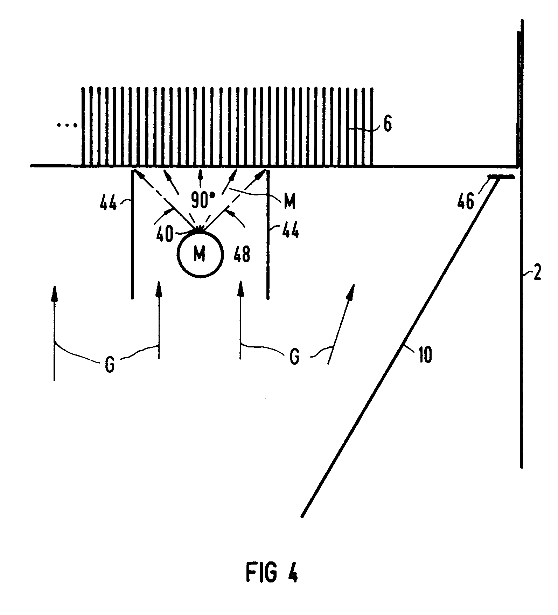

Aus Figur 2 und 4 ergibt sich, daß der Teilkanal 42 im wesentlichen durch zwei parallele, im oberen Teil der Haube 10 etwa radial verlaufende Bleche oder Wände 44 gebildet wird. Der Teilkanal 42 ist schmal gegenüber dem Durchmesser des Strömungswegs des Reingases G in der Zuleitung 20; er verläuft im wesentlichen über den gesamten Durchmesser dieses sich innerhalb der Haube 10 konisch öffnenden Strömungsweges. Aus Figur 1 ergibt sich, daß der Teilkanal 42 unmittelbar vor dem Wärmespeicher 6 angeordnet ist. Und Figur 2 zeigt, daß er mit Abstand zu Dichtungen 46 angeordnet ist, die zwischen den Strömungswegen für das Rohgas R und für das Reingas G angeordnet sind. Bei diesen Dichtungen 46 handelt es sich um Lippen oder Leisten. Der Teilkanal 42 hat einen rechteckigen Querschnitt. In ihm verläuft über die gesamte Breite ein horizontal angeordnetes Rohr 48, das die oben erwähnten Austrittsöffnungen 40 aufweist. Dieses an beiden Enden geschlossene Rohr 48 wird zentral von einem vertikalen Zuführungsrohr 50 mit Reaktionsmittel M gespeist. Die Speisung erfolgt über eine Leitung 52 und ein Ventil 54 sowie über das Stellventil 30 ebenfalls aus der Reaktionsmittel-Quelle 32. Das Rohr 50 kann somit als zentraler Anschluß für das Reaktionsmittel NH₃ angesehen werden.

In Figur 4 ist in Vergrößerung dargestellt, daß das im Teilkanal 42 angeordnete Rohr 48 über seine Austrittsöffnungen 40 Reaktionsmittel M in Richtung auf den Wärmespeicher 6 und den Katalysator 4 abgibt. Der Austrittswinkel beträgt vorliegend etwa 90 Grad. Aus Figur 4 geht auch hervor, daß der Teilkanal 44 nur einen Teil des gesamten Reingasstroms G aufnimmt. In diesem Teil wird eine relativ hohe Konzentration an NH₃ eingestellt. Das bedeutet, daß beim Umlaufen der beiden Hauben 8 und 10 um die Zentralachse 12 im Katalysator 4 fortlaufend neue Abschnitte mit hoher NH₃-Konzentration in Form von Streifen gebildet werden. Daß die NH₃-Konzentration dadurch zumindest im unteren Bereich des Katalysators 4 höher ist als bei einer Gesamtanströmung, ergibt sich aus Figur 5. Auch hier ist im Kurvenverlauf p über der Höhe H die NH₃-Konzentration c im Katalysator 4 bei luftseitiger NH₃-Zugabe dargestellt. Wiederum ist hier die NH₃-Zugabe von der Seite des Rohgases R gemäß Kurve q so eingestellt, daß bei H = O praktisch kein NH₃ mehr ankommt. Die Kombination der Kurven p und q ergibt auch hier die Kurve r. Diese zeigt, daß auch in diesem Fall über die Höhe H eine weitgehend konstante NH₃-Konzentration im Katalysator 4 vorherrscht. Im Vergleich zu Figur 3 ist sie im Mittel wesentlich höher. Dadurch ergibt sich eine noch höhere Umsetzrate bei der katalytischen Aktivität.

Auch die zweite Variante gemäß Figuren 2, 4 und 5 macht sich demnach die Tatsache zunutze, daß der SCR-Katalysator 4 ein hohes Aufnahmevermögen für NH₃ besitzt. Das Reduktionsmittel NH₃ wird von der Rohgas- und der Reingasseite zugegeben. Es wird adsorptiv vom Katalysator 4 aufgenommen. Bei Durchgang des Rohgases R reagiert es dann mit dem NOₓ; z. B. wird es mit NO zu N₂ und H₂O abreagiert (SCR-Verfahren). Um den Katalysator 4 mit NH₃ zu beladen, genügt es nach den Figuren 2, 4 und 5, ihm dieses NH₃ in einem engen Bereich anzubieten. Die zweite Variante beruht deshalb darauf, daß das Reduktionsmittel hochkonzentriert fortlaufend einem sehr schmalen Bereich des Katalysators (der sich bevorzugt nach Figur 2 radial erstreckt) zugegeben wird. Dieser Bereich wird bevorzugt durch die genannten Bleche oder Wände 44 so abgetrennt, daß im Bereich der Stoßstellen oder Übergänge Reingas/Rohgas kein NH₃ vorhanden ist und somit auch kein NH₃ übertreten kann. Als weiterer Vorteil ist zu verzeichnen, daß die erhöhte NH₃-Konzentration eine bessere Sättigung des Katalysators 4 bewirkt. Außerdem ist gegenüber der ersten Variante 34A als Vorteil anzusehen, daß die zweite Eingabestelle konstruktiv einfacher und billiger ist, da nur ein einziges radiales Rohr 48 (und kein Netz) verwendet wird. Außerdem ist von Vorteil, daß eine Verteilungseinstellung nicht notwendig ist.

Es wurde voranstehend dargelegt, daß die Hauben 8 und 10 drehbar sind, während die Anordnung 4, 6 bezüglich des Gehäuses 2 fixiert ist. Es kann auch umgekehrt vorgegangen werden, das heißt der Wärmespeicher 6 und der Katalysator 4 können zwischen entsprechenden, aber fixierten Hauben schrittweise oder kontinuierlich drehbar sein. Weiterhin können der Wärmespeicher und der Katalysator vereinigt sein, das heißt der Katalysator kann zugleich auch als Wärmespeicher ausgebildet sein.

Eine weitere Alternative ist dadurch gegeben, daß der Wärmespeicher in eine Anzahl von Teilwärmespeichern und daß der Katalysator in eine Anzahl von Teilkatalysatoren unterteilt wird. Die Teilwärmespeicher und Teilkatalysatoren werden dann abwechselnd vom Rohgas und vom Reingas durchströmt, wobei zur Umsteuerung der beiden Gasströme vorzugsweise Klappen eingesetzt werden können. Auch bei einer solchen Konstruktion kann also von der gleichzeitigen Einleitung des Reduktionsmittels M in den Strömungsweg des Rohgases R und in den Strömungsweg des Reingases G Gebrauch gemacht werden.

Es war ebenfalls bereits dargelegt, daß der Regenerativ-Vorwärmer 1 vorliegend gemäß Figur 1 ein Luftvorwärmer sein kann. Das Rohgas R ist dann das von einer Verbrennungsanlage gelieferte Rauchgas mit NOₓ-Schadstoffkomponenten, das Reingas G ist Luft und das Reaktionsmittel M ist Ammoniak, wobei als Katalysator 4 ein üblicher SCR-Katalysator eingesetzt wird. Alternativ hierzu kann es sich bei dem Vorwärmer auch um einen Gasvorwärmer handeln. In üblicher Anwendung ist dann das Rohgas das von einer (nicht gezeigten) Verbrennungsanlage gelieferte Rauchgas mit NOₓ-Schadstoffkomponenten, das Reingas G ist das teilweise von den NOₓ-Schadstoffkomponenten befreite Rauchgas, und das Reduktionsmittel ist wiederum Ammoniak. Auch in diesem Fall wird ein üblicher SCR-Katalysator verwendet.

Die Erfindung ist jedoch auf diese Anwendungen nicht beschränkt. Prinzipiell kann es sich auch um einen Oxidationsprozeß handeln, beispielsweise mit CH₄, bei dem das Reaktionsmittel Sauerstoff O₂ oder Ozon O₃ ist.

Abschließend sei noch darauf hingewiesen, daß die verschiedenen Möglichkeiten der Einbringung des Reaktionsmittels M in den Katalysator 4 (rauchgasseitig, reingasseitig über Netz und/oder Teilkanal) so miteinander kombiniert werden können, daß für jeden Anwendungs- und Lastfall (Temperturabhängigkeit der NH₃-Adsorption ist hier zu beachten) eine optimale Zuordnung der NH₃-Menge möglich ist. Demgemäß kann eine temperaturabhängige Verstellung der Ventile 28, 38 und 54 vorgesehen sein, so daß sich für jeden Betriebsfall optimale Verhältnisse ergeben. Insbesondere ist hier an eine Verhältnisänderung der Durchsätze nach Maßgabe eines oder mehrerer Parameter, zum Beispiel des Rohgases R, zu denken.

## Patentansprüche

1. Regenerativ-Vorwarmer, der aufweist:
a) einen Wärmespeicher (6),
b) einen Katalysator (4),
wobei der Warmespeicher (6) und der Katalysator (4) jeweils gemeinsam wechselweise von einem eine Schadstoffkomponente (S) enthaltenden Rohgas (R) und von einem Reingas (G) durchströmbar sind,
c) mit einer ersten Zugabestelle (24) für ein gasförmiges Reaktionsmittel (M), die im Strömungsweg des Rohgases (R) vor dem Katalysator (4) gelegen ist, und
d) mit einer zweiten Zugabestelle (34 A, 34 B) für das gleiche gasförmige Reaktionsmittel (M), die im Strömungsweg des Reingases (G) vor dem Katalysator (4) gelegen ist.

2. Regenerativ-Vorwärmer nach Anspruch 1, **dadurch gekennzeichnet,** daß die zweite Zugabesteile (34A) so angeordnet ist, daß das Reaktionsmittel (M) dem gesamten Strom des Reingases (G) zumischbar ist.

3. Regenerativ-Vorwärmer nach Anspruch 2, **dadurch gekennzeichnet,** daß die zweite Zugabestelle (34A) ein Netz mehrerer Einspeisepunkte (35A) für das Reaktionsmittel (M) umfaßt, wobei dieses Netz quer zum Strömungsweg des Reingases (G) angeordnet ist.

4. Regenerativ-Vorwärmer nach Anspruch 1, **dadurch gekennzeichnet,** daß die zweite Zugabestelle (34B) mindestens eine Austrittsöffnung (40) umfaßt, die in einem von dem Reingas (G) durchströmbaren Teilkanal (42) angeordnet ist.

5. Regenerativ-Vorwärmer nach Anspruch 1, **dadurch gekennzeichnet,** daß die zweite Zugabestelle (34A, 34B)
a) ein Netz mehrerer Einspeisepunkte (35A) für das Reaktionsmittel (M), welches Netz quer zum Strömungsweg des Reingases (G) angeordnet ist, und
b) mindestens eine Austrittsöffnung (40) für das Reaktionsmittel (M), die in einem von dem Reingas (G) durchströmbaren Teilkanal (42) angeordnet ist,
umfaßt.

6. Regenerativ-Vorwärmer nach Anspruch 4 oder 5,
**dadurch gekennzeichnet**, daß die Querschnittsfläche des Teilkanals (42) klein gegenüber der Querschnittsfläche des Strömungsweges des Reingases (G) ist, und daß der Teilkanal im wesentlichen über den gesamten Durchmesser dieses Strömungsweges verläuft.

7. Regenerativ-Vorwärmer nach Anspruch 4, 5 oder 6, **dadurch gekennzeichnet,** daß der Teilkanal (42) unmittelbar vor dem Wärmespeicher (6) oder dem Katalysator (4) angeordnet ist.

8. Regenerativ-Vorwärmer nach einem der Ansprüche 4 bis 7, **dadurch gekennzeichnet,** daß der Teilkanal (42) mit Abstand zu Dichtungen (46) zwischen den Strömungswegen für das Rohgas (R) und das Reingas (G) angeordnet ist.

9. Regenerativ-Vorwärmer nach einem der Ansprüche 4 bis 8, **dadurch gekennzeichnet,** daß der Teilkanal (42) bevorzugt einen rechteckigen Querschnitt besitzt, und daß in dem Teilkanal (42) ein Rohr (48) verläuft, das über seine Länge mehrere Austrittsöffnungen (40) für das Reaktionsmittel (M) besitzt.

10. Regenerativ-Vorwärmer nach Anspruch 9, **dadurch gekennzeichnet,** daß das Rohr (48) an einem zentral gelegenen Anschluß (50) für das Reaktionsmittel (M; NH₃) angeschlossen ist.

11. Regenerativ-Vorwärmer nach einem der Ansprüche 1 bis 10, **dadurch gekennzeichnet,** daß dem Wärmespeicher (6) und dem Katalysator (4) schrittweise oder kontinuierlich drehbare Hauben (10, 8) zugeordnet sind.

12. Regenerativ-Vorwärmer nach einem der Ansprüche 1 bis 10, **dadurch gekennzeichnet,** daß der Wärmespeicher (6) und der Katalysator (4) zwischen Hauben (8, 10) schrittweise oder kontinuierlich drehbar sind.

13. Regenerativ-Vorwärmer nach einem der Ansprüche 1 bis 12, **dadurch gekennzeichnet,** daß der Katalysator (4) zugleich auch als Wärmespeicher (6) ausgebildet ist.

14. Regenerativ-Vorwärmer nach einem der Ansprüche 1 bis 12, **dadurch gekennzeichnet**, daß der Wärmespeicher (6) in eine Anzahl von Teilwärmespeichern und der Katalysator (4) in eine Anzahl von Teilkatalysatoren unterteilt ist, und daß die Teilwärmespeicher und die Teilkatalysatoren jeweils gemeinsam abwechselnd vom Rohgas (R) und vom Reingas (G) durchströmbar sind, wobei zur Umsteuerung der beiden Gasströme vorzugsweise Klappen vorgesehen sind.

15. Regenerativ-Vorwärmer nach einem der Ansprüche 1 bis 14, **dadurch gekennzeichnet,** daß die Zugabestellen (24, 34A, 34B) für das Reaktionsmittel (M) über Ventile (28, 38, 54) an ein und dieselbe Reaktionsmittel-Quelle (32) angeschlossen sind, wobei diese Ventile bevorzugt nach Maßgabe eines oder mehrerer Parameter, z. B. des Rohgases (R), gesteuert sind.

16. Regenerativ-Vorwärmer nach einem der Ansprüche 1 bis 15, **dadurch gekennzeichnet**, daß das Verhältnis zwischen dem dem Reingas (G) zugeführten Reaktionsmittel (M; NH₃) und dem dem Rohgas (R) zugeführten Reaktionsmittel (M; NH₃) größer als 0,5 ist, beispielsweise 60 % zu 40 %.

17. Regenerativ-Vorwärmer nach einem der Ansprüche 1 bis 16, **dadurch gekennzeichnet**, daß er als Luftvorwärmer ausgebildet ist.

18. Regenerativ-Vorwärmer nach Anspruch 17, **dadurch gekennzeichnet**, daß das Rohgas (R) von einer Verbrennungsanlage geliefertes Rauchgas mit NOₓ-Schadstoffkomponenten, das Reingas (G) Luft und das Reaktionsmittel (M) Ammoniak (NH₃) ist.

19. Regenerativ-Vorwärmer nach einem der Ansprüche 1 bis 16, **dadurch gekennzeichnet**, daß er als Gasvorwärmer ausgebildet ist.

20. Regenerativ-Vorwärmer nach Anspruch 19, **dadurch gekennzeichnet**, daß das Rohgas (R) von einer Verbrennungsanlage geliefertes Rauchgas mit NOₓ-Schadstoffkomponenten, das Reingas (G) das teilweise von den NOₓ-Schadstoffkomponenten befreite Rauchgas und das Reduktionsmittel (M) Ammoniak (NH₃) ist.

21. Verfahren zum Betrieb eines Regenerativ-Vorwärmers, der einen Wärmespeicher (6) und einen Katalysator (4) umfaßt, die jeweils gemeinsam wechselweise von einem eine Schadstoffkomponente (S) enthaltenden Rohgas (R) und einem Reingas (G) durchströmt werden, wobei zwecks katalytischer Reaktion ein Reaktionsmittel (M) in einen Strömungsweg eingeleitet wird,
**dadurch gekennzeichnet**, daß sowohl in den Strömungsweg des Rohgases (R) als auch in den Strömungsweg des Reingases (G) das Reaktionsmittel (M) eingeleitet wird.

22. Verfahren nach Anspruch 21, **dadurch gekennzeichnet**, daß das Reaktionsmittel (M) annähernd über den gesamten Querschnitt des Strömungsweges des Reingases (G) und/oder über einen abgegrenzten Teilkanal (42) des Strömungsweges des Reingases (G) dem Reingas (G) beigemischt wird.

## Claims

1. A regenerative preheater comprising:
a) a heat accumulator (6) and
b) a catalyst (4),
wherein a raw gas (R) containing a harmful component (S) and a clean gas (G) can flow through the heat accumulator (6) and the catalyst (4) in alternation,
the preheater having
c) a first admission point (24) for a gaseous reagent (M) which is disposed in the flow path of the raw gas (R) upstream of the catalyst (4), and
d) a second admission point (34A, 34B) for the same gaseous reagent (M) which is disposed in the flow path of the clean gas (G) upstream of the catalyst (4).

2. A regenerative preheater according to claim 1, characterised in that the second admission point (34A) is arranged so that the reagent (M) can be admixed with the entire flow of the clean gas (G).

3. A regenerative preheater according to claim 2, characterised in that the second admission point (34A) comprises a network of a plurality of feed points (35A) for the reagent (M), this network being arranged transversely to the flow path of the clean gas (G).

4. A regenerative preheater according to claim 1, characterised in that the second admission point (34B) comprises at least one outlet opening (40) which is arranged in a sub-channel (42) through which the clean gas (R) can flow.

5. A regenerative preheater according to claim 1, characterised in that the second admission point (34A, 34B) comprises
a) a network of several feed points (35A) for the reagent (M), said network being arranged transversely to the flow path of the clean gas (G), and
b) at least one outlet opening (40) for the reagent (M) which is arranged in a sub-channel (42) through which the clean gas (G) can flow.

6. A regenerative preheater according to claim 4 or claim 5, characterised in that the cross-sectional area of the sub-channel (42) is small compared with the cross-sectional area of the flow path of the clean gas (R), and that the sub-channel extends over substantially the whole diameter of this flow path.

7. A regenerative preheater according to claim 4, claim 5 or claim 6, characterised in that the sub-channel (42) is arranged immediately upstream of the heat accumulator (6) or of the catalyst (4).

8. A regenerative preheater according to one of claims 4 to 7, characterised in that the sub-channel (42) is arranged spaced away from seals (46) between the flow paths for the raw gas (R) and the clean gas (G).

9. A regenerative preheater according to one of claims 4 to 8, characterised in that the sub-channel (42) preferably has a rectangular cross-section, and that in the sub-channel (42) a tube (48) extends which has a plurality of outlet openings (40) for the reagent (M) over its whole length.

10. A regenerative preheater according to claim 9, characterised in that the tube (48) is connected to a centrally disposed connection (50) for the reagent (M; NH₃).

11. A regenerative preheater according to one of claims 1 to 10, characterised in that incrementally or continuously rotatable hoods (10, 8) are associated with the heat accumulator (6) and the catalyst (4).

12. A regenerative preheater according to one of claims 1 to 10, characterised in that the heat accumulator (6) and the catalyst (4) are incrementally or continuously rotatable between hoods (8, 10).

13. A regenerative reheater according to one of claims 1 to 12, characterised in that the catalyst (4) is at the same time formed as a heat accumulator (6).

14. A regenerative preheater according to one of claims 1 to 12, characterised in that the heat accumulator (6) is subdivided into a number of heat accumulator sections and the catalyst into a number of catalyst sections, and that the heat accumulator and catalyst sections are adapted to have the raw gas (R) and the clean gas (G) flow through them in alternation, flaps preferably being provided for diversion of the two gas flows.

15. A regenerative preheater according to one of claims 1 to 14, characterised in that the admission points (24, 34A, 34B) for the reagent (M) are connected through valves (28, 38, 54) to one and the same source (32) of reagent, these valves preferably being controlled according to one or more parameters, e.g. of the raw gas (R).

16. A regenerative preheater according to one of claims 1 to 15, characterised in that the ratio of the amount of reagent (M; NH₃) supplied to the clean gas (G) to the amount of the reagent (M; NH₃) supplied to the raw gas (R) is greater than 0.5, for example 60% to 40%.

17. A regenerative preheater according to one of claims 1 to 16, characterised in that it is in the form of an air preheater.

18. A regenerative preheater according to claim 17, characterised in that the raw gas (R) is flue gas with NOₓ pollutant components, furnished by a combustion system, the clean gas (G) is air and the reagent (M) is ammonia (NH₃).

19. A regenerative preheater according to one of claims 1 to 16, characterised in that it is in the form of a gas preheater.

20. A regenerative preheater according to claim 19, characterised in that the raw gas (R) is flue gas with NOₓ pollutant components, furnished by a combustion system, the clean gas (R) is the flue gas, partly freed from the NOₓ pollutant components, and the reducing agent (M) is ammonia (NH₃).

21. A method of operating a regenerative preheater which comprises a heat accumulator (6) and a catalyst (4) through which a raw gas (R) containing harmful components (S) and a clean gas (G) are passed in alternation, wherein a reagent (M) is introduced into a flow path for the purpose of catalytic reaction, characterised in that the reagent (M) is introduced both into the flow path of the raw gas (R) and into the flow path of the clean gas (G).

22. A method according to claim 21, characterised in that the reagent (M) is admixed with the clean gas (G) over substantially the whole cross-section of the flow path of the clean gas (G) and/or through a restricted sub-channel (42) of the flow path of the clean gas (G).

## Revendications

1. Préchauffeur à régénération qui présente :
a) un accumulateur de chaleur (6),
b) un catalyseur (4),
dans lequel l'accumulateur de chaleur (6) et le catalyseur (4), peuvent être traversés respectivement de manière conjointe, alternativement par un gaz brut (R) contenant un composant de polluant (S) et par un gaz épuré (G),
c) avec un premier endroit d'addition (24) pour un agent réactionnel gazeux (M), qui est situé dans la voie d'écoulement du gaz brut (R) devant le catalyseur (4), et
d) avec un second endroit d'addition (34A, 34B) pour le même agent réactionnel gazeux (M), qui est situé dans la voie d'écoulement du gaz épuré (G) devant le catalyseur (4).

2. Préchauffeur à régénération selon la revendication 1, caractérisé en ce que le second endroit d'addition (34A) est disposé de telle sorte que l'agent réactionnel (M) peut être mélangé au courant total du gaz épuré (G).

3. Préchauffeur à régénération selon la revendication 2, caractérisé en ce que le second endroit d'addition (34A) comprend un réseau de plusieurs points d'alimentation (35A) pour l'agent réactionnel (M), dans lequel ce réseau est disposé transversalement par rapport à la voie d'écoulement du gaz épuré (G).

4. Préchauffeur à régénération selon la revendication 1, caractérisé en ce que le second endroit d'addition (34B) comprend au moins une ouverture d'évacuation (40) qui est disposée dans un canal partiel (42) qui peut être traversé par le gaz épuré (G).

5. Préchauffeur à régénération selon la revendication 1, caractérisé en ce que le second endroit d'addition (34A, 34B) comprend
a) un réseau de plusieurs points d'alimentation (35A) pour l'agent réactionnel (M), ledit réseau étant disposé transversalement par rapport à la voie d'écoulement du gaz épuré (G), et
b) au moins une ouverture d'évacuation (40) pour l'agent réactionnel (M), qui est disposée dans un canal partiel (42) qui peut être traversé par le gaz épuré (G).

6. Préchauffeur à régénération selon la revendication 4 ou 5, caractérisé en ce que l'aire de la section du canal partiel (42) est petite par rapport à l'aire de la section de la voie d'écoulement du gaz épuré (G) et en ce que le canal partiel s étend essentiellement sur tout le diamètre de cette voie d'écoulement.

7. Préchauffeur à régénération selon la revendication 4, 5 ou 6, caractérisé en ce que le canal partiel (42) est disposé immédiatement devant l'accumulateur de chaleur (6) ou le catalyseur (4).

8. Préchauffeur à régénération selon l'une quelconque des revendications 4 à 7, caractérisé en ce que le canal partiel (42) est disposé à distance de joints d'étanchéité (46) entre les voies d'écoulement pour le gaz brut (R) et le gaz épuré (G).

9. Préchauffeur à régénération selon l'une quelconque des revendications 4 à 8, caractérisé en ce que le canal partiel (42) possède de préférence une section rectangulaire et en ce qu'un tube (48) s'étend dans le canal partiel (42), qui possède, sur sa longueur, plusieurs ouvertures d'évacuation (40) pour l'agent réactionnel (M).

10. Préchauffeur à régénération selon la revendication 9, caractérisé en ce que le tube (48) est raccordé à un raccord (50) pour l'agent réactionnel (M; NH₃), situé en position centrale.

11. Préchauffeur à régénération selon l'une quelconque des revendications 1 à 10, caractérisé en ce que, à l'accumulateur de chaleur (6) et au catalyseur (4), sont attribuées des Hottes (10, 8) rotatives en pas-à-pas ou en continu.

12. Préchauffeur à régénération selon l'une quelconque des revendications 1 à 10, caractérisé en ce que l'accumulateur de chaleur (6) et le catalyseur (4) sont rotatifs en pas-à-pas ou en continu entre des hottes (8, 10).

13. Préchauffeur à régénération selon l'une quelconque des revendications 1 à 12, caractérisé en ce que le catalyseur (4) est réalisé en même temps comme accumulateur de chaleur (6).

14. Préchauffeur à régénération selon l'une quelconque des revendications 1 à 12, caractérisé en ce que l'accumulateur de chaleur (6) est subdivisé en un certain nombre d'accumulateurs de chaleur partiels et le catalyseur (4) est subdivisé en un certain nombre de catalyseurs parties, et en ce que les accumulateurs de chaleur partiels et les catalyseurs partiels peuvent être traversés respectivement de manière conjointe, alternativement par du gaz brut (R) et par du gaz épuré (G), où sont prévus de préférence des clapets pour le renversement de marche des deux courants de gaz.

15. Préchauffeur à régénération selon l'une quelconque des revendications 1 à 14, caractérisé en ce que les endroits d'addition (24, 34A, 34B) pour l'agent réactionnel (M) sont raccordés par des soupapes (28, 38, 54) à une seule et même source d'agents réactionnels (32), dans lequel ces soupapes sont commandées de préférence en fonction d'un ou de plusieurs paramètres, par exemple du gaz brut (R).

16. Préchauffeur à régénération selon l'une quelconque des revendications 1 à 15, caractérisé en ce que le rapport entre l'agent réactionnel (M, NH₃) amené au gaz épuré (G) et l'agent réactionnel (M, NH₃) amené au gaz brut (R) est supérieur à 0,5, par exemple de 60% à 40%.

17. Préchauffeur à régénération selon l'une quelconque des revendications 1 à 16, caractérisé en ce qu'il est réalisé comme réchauffeur d'air.

18. Préchauffeur à régénération selon la revendication 17, caractérisé en ce que le gaz brut (R) est un gaz de fumée produit par une installation d'incinération, contenant des composants de polluant NOₓ, le gaz épuré (G) est de l'air et l'agent réactionnel (M) est de l'ammoniac (NH₃).

19. Préchauffeur à régénération selon l'une quelconque des revendications 1 à 16, caractérisé en ce qu'il est réalisé comme réchauffeur de gaz.

20. Préchauffeur à régénération selon la revendication 19, caractérisé en ce que le gaz brut (R) est du gaz de fumée produit par une installation d'incinération, contenant des composants de polluant NOₓ, le gaz épuré (G) est le gaz de fumée partiellement libéré des composants de polluant NOₓ et l'agent de réduction (M) est de l'ammoniac (NH₃).

21. Procédé pour la mise en service d'un préchauffeur à régénération qui comprend un accumulateur de chaleur (6) et un catalyseur (4) qui sont traversés respectivement de manière conjointe, alternativement par un gaz brut (R) contenant un composant de polluant (S) et par un gaz épuré (G), dans lequel, à des fins de réaction catalytique, on introduit un agent réactionnel (M) dans une voie d'écoulement, caractérisé en ce que l'on introduit l'agent réactionnel (M) aussi bien dans la voie d'écoulement du gaz brut (R) que dans la voie d'écoulement du gaz épuré (G).

22. Procédé selon la revendication 21, caractérisé en ce que l'agent réactionnel (M) est mélangé au gaz épuré (G) en recouvrant plus ou moins toute la section de la voie d'écoulement du gaz épuré (G) et/ou en recouvrant un canal partiel délimité (42) de la voie d'écoulement du gaz épuré (G).
